# EUROPEAN PATENT SPECIFICATION

(11) **EP 4 359 353 B1**
(45) Date of publication and mention of the grant of the patent: **06.08.2025**
(21) Application number: 22737645.6
(22) Date of filing: 20.06.2022
(51) Int. Cl.: C02F 11/147, C02F 11/12, C02F 1/52, C02F 1/56, C02F 11/127, C02F 103/28, C02F 11/122

(54) **A TREATMENT SYSTEM, ITS USE AND METHOD FOR TREATING EFFLUENT AND/OR SLUDGE**
BEHANDLUNGSSYSTEM, DESSEN VERWENDUNG UND VERFAHREN ZUR BEHANDLUNG VON ABWASSER UND/ODER SCHLAMM
SYSTÈME DE TRAITEMENT, SON UTILISATION ET PROCÉDÉ DE TRAITEMENT D'UN EFFLUENT ET/OU DE BOUES

(30) Priority: 22.06.2021 FI 20215730
(43) Date of publication of application: 01.05.2024
(73) Proprietor: Kemira OYJ, Helsinki 00180 (FI)
(72) Inventor: VUORENPALO, Veli-Matti, 02271 Espoo (FI); AHLGREN, Jonni, 02271 Espoo (FI); HILTUNEN, Jaakko, 00180 Helsinki (FI); PERANDER, Anna-Maija, 02271 Espoo (FI)
(74) Representative: Berggren Oy
(86) International application number: PCT/FI2022/050436
(87) International publication number: WO 2022/269131

(56) References cited:
- EP-A1- 3 824 025
- EP-A2- 0 845 495
- WO-A1-2020/016424
- US-A- 6 080 277
- US-A1- 2021 269 981
- US-B2- 9 790 111

## Description

The present system relates to a treatment system, its use and method for treating an effluent and/or sludge in a manufacturing process of cellulosic pulp or fibrous cellulosic web according to the preambles of the enclosed independent claims.

In general, the manufacture of pulp, paper, board, and the like are very water-intensive processes with almost closed water circulations, which sets great demands on the effluent water and sludge treatment. Synthetic polymers are commonly used in water treatment and sludge dewatering both in municipal water treatment as well as various industrial processes, such as in manufacture of pulp, paper, board and the like. Effluent waters and sludges from the manufacture of paper, board and the like comprise cellulosic fibre material as well as other solid or semi-solid particles, and they are often demanding to treat efficiently. For example, typical sludge from board making may comprise, among others, cellulosic fibre material, inks, polymeric materials, and inorganic fillers. Dewatering of sludge originating from any of these manufacturing processes is needed for the further use of the sludge, for example, as a fuel in incinerators or as an additive in the manufacture of cement-based products, wood containing panels, composite materials, or for carbonisation into char.

There is a growing trend to decrease the use of synthetic petroleum-based polymers in many industrial processes. The synthetic polymers are often seen as unsustainable alternatives in view of their production from non-renewable sources. Consequently, there is a desired to reduce the use of synthetic polymers whenever possible, and/or replace them with other alternatives, which are preferably based on renewable and environmentally friendly sources. Some relevant prior art documents are US 6 080 277 A, EP 0 845 495 A2, WO 2020 / 016424, US 9 790 111 B2.

An object of this invention is to minimise or even eliminate the disadvantages existing in the prior art.

An object of the present invention is to provide a treatment system and method suitable for treating an effluent and/or sludge from a manufacture of paper, board or the like.

A further object of this invention is to provide a treatment system and method increasing the amount of biobased material in treatment of sludge or effluent from a manufacture of paper, board or the like.

These objects are attained with the invention having the characteristics presented below in the characterising parts of the independent claims. Some preferable embodiments are disclosed in the dependent claims.

The features recited in the dependent claims and the embodiments in the description are mutually freely combinable unless otherwise explicitly stated.

The exemplary embodiments presented in this text and their advantages relate by applicable parts to all aspects of the invention, even though this is not always separately mentioned.

A typical treatment system according to the present invention for treating effluent and/or sludge from a manufacturing process of cellulosic pulp or a fibrous cellulosic web, such as paper or board, wherein the effluent and/or sludge is in form of a suspension which comprises solid material and/or particles suspended in an aqueous liquid phase, which treatment system comprises
- a water-soluble cationized polysaccharide component comprising cationized cellulose having a charge density of at least 1.5 meq/g dry, measured at pH 4, and a degree of substition of at least 0.32 and
- a synthetic cationic copolymer of (meth)acrylamide and at least one cationic monomer, the copolymer having a charge density of at most 5 meq/g.

A typical use of a treatment system according to the present invention is for treatment of effluent and/or sludge in form of a suspension comprising solid material and/or solid particles suspended in an aqueous liquid phase in a manufacture of cellulosic pulp or fibrous cellulosic web, such as paper, board, tissue or the like.

A typical method according to the invention for treating an effluent and/or sludge in a manufacturing process of cellulosic pulp or fibrous cellulosic web, wherein the effluent and/or sludge is form of a suspension comprising solid material and/or particles suspended in an aqueous liquid phase, comprises
- adding to the suspension a treatment system comprising (i) a water-soluble cationized polysaccharide component comprising cationized cellulose having a charge density of at least 1.5 meq/g dry, measured at pH 4 and a degree of substitution of at least 0.32; and (ii) a synthetic cationic copolymer of (meth)acrylamide and at least one cationic monomer, the copolymer having a charge density of at most 5 meq/g,
- allowing the treatment system to flocculate the suspension, and
- dewatering the suspension by mechanically separating the flocculated solid particles from the aqueous liquid phase.

Now it has been surprisingly found that a cationized polysaccharide component can be used together with a synthetic cationic copolymer of (meth)acrylamide in treatment of effluent and/or sludge in manufacture of paper, board, tissue or the like. The treatment system of the present invention comprises cationized cellulose which provides an effective dewatering and a possibility to significantly increase the amount of biobased components in the treatment process of effluent and/or sludge. Increase in the amount of the biobased components may even improve the subsequent use of the obtained dewatered sludge, for example, as a fuel in incinerators or as a process additive.

The cationized polysaccharide component and the cationic copolymer of (meth)acrylamide of the treatments system are both in form of solutions.

The treatment system according to the present invention comprises a water-soluble cationized polysaccharide component, which comprises cationized cellulose having a charge density of at least 1.5 meq/g dry, preferably at least 1.75 meq/g dry, more preferably at least 2 meq/g dry, measured at pH 4. According to one preferred embodiment the cationized cellulose may have a charge density in a range of 1.5 - 4 meq/g dry, preferably 1.75 - 3.75 meq/g dry, more preferably 2 - 3.5 meq/g dry.

The charge density is determined at pH 4 by using particle charge titrator (AFG Analytic GmbH, Germany). It is assumed that the high charge density, together with the large molecular size of the cationized cellulose improves the interaction between the polysaccharide component and the synthetic cation ic copolymer of the treatment system and suspended material and/or particles of the effluent or sludge suspension. The high charge density of the cationized cellulose may also improve the strength of the formed flocs, and make the flocs more resistant to shearing forces, e.g. during pumping, mechanical dewatering, such as centrifuging or the like. Improved floc strength may also increase the speed and degree of the dewatering of the sludge.

The polysaccharide component comprises cationized cellulose. The cationized cellulose may originate from wood, such as hardwood, softwood or their mixtures, or from other cellulose containing non-wood biomass, such as cotton or cellulose containing plant residues from agriculture and/or harvesting. Use of cationized cellulose makes it possible to use polysaccharide from non-edible sources for treatment of effluent and/or sludge suspensions. This is advantageous in view of sustainability and improves the efficient use of available sources. Suitable cationized cellulose may be obtained by any suitable method, for example by a method disclosed in international patent application PCT/FI2020/050817.

The cationized polysaccharide component may further comprise an additional polysaccharide, such as microfibrillated cellulose, starch, chitosan, guar gum, or the like, which can be cationized. The additional polysaccharide may be cationized to a desired charge density value of at least 1.5 meq/g, preferably at least 1.75 meq/g dry, more preferably at least 2 meq/g dry, measured at pH 4. The charge density may be, for example in a range of 1.5 - 4 meq/g dry, preferably 1.75 - 3.75 meq/g dry, more preferably 2 - 3.5 meq/g dry. The charge densities are determined at pH 4 by using particle charge titrator (AFG Analytic GmbH, Germany). Preferably the additional cationized polysaccharide is cationized starch. According to one embodiment the polysaccharide component is a mixture of cationized cellulose and cationized starch. The cationized cellulose and cationized starch may have similar or different charge densities.

The cationized cellulose which is suitable for use in the treatment system of the present invention is preferably at least partly soluble in water, preferably fully soluble in water. In the present context, the term "water-soluble" indicates that the cationized cellulose is fully miscible with water providing a transparent or nearly transparent solution. When mixed with excess of water, the cationized cellulose is preferably fully dissolved and the obtained solution is preferably essentially free from discrete solid particles, granules or coagulated clots. Excess of water means that the obtained cellulose solution is not a saturated solution.

One indication of the water-solubility of the cationized cellulose is its turbidity values. The cationized cellulose may have turbidity less than 1000 NTU, preferably less than 500 NTU, more preferably less than 250 NTU. The turbidity may be, for example, 40 - 1000 NTU, 40 - 500 NTU or 40 - 250 NTU. The turbidity values are measured at 1 weight-% concentration, by using HACH, 2100 AN IS Laboratory Turbidimeter. Low turbidity value of an aqueous solution of cationized cellulose clearly indicate that the cationized cellulose is water-soluble, i.e. dissolved in water. The cationized cellulose comprises cationic groups connected to cellulose structure. Degree of substitution indicates the number of cationic groups associated with or connected to the cellulose structure. The cationized cellulose has a degree of substitution DS at least 0.32, preferably at least 0.37, more preferably at least 0.4. The degree of substitution may be in a range of 0.32 - 1.75, preferably 0.37 - 1.6, more preferably 0.4 - 1.5 or 0.5 - 1.3. The degree of substitution can be calculated on basis of the measured charge density value for the obtained cationized cellulose. It is assumed that the high degree of substitution makes the cationized cellulose water-soluble and may even make it more suitable for use in dewatering of effluent and/or sludge in the manufacturing process of cellulosic pulp and fibrous cellulosic webs.

According to one embodiment the cationized polysaccharide component comprises cationized cellulose has a viscosity of at least 80 mPas, preferably at least 100 mPas, more preferably at least 150 mPas, measured at 1.8 weight-% concentration of cationized cellulose in an aqueous solution comprising 9.1 weight-% of NaCl, at 25 °C. According to one embodiment the viscosity of the cationized cellulose may be in a range of 100 - 6000 mPas, preferably 150 - 2500 mPas, when measured at 1.8 weight-% concentration of cationized cellulose in aqueous solution, comprising 9.1 weight-% of NaCl, at 25 °C. The viscosity values are measured by using Brookfield LV viscometer with a small sample adapter, spindle SC4-18, with maximum possible rotational speed. The high viscosity of the cationized cellulose solution indicates also that the water-soluble cationized cellulose has a high molecular weight, which improves the interaction with suspended solid material and/or particles.

According to another embodiment of the invention, the cationized polysaccharide component may further comprise cationized starch, which preferably has a viscosity of at least 10 mPas, more preferably at least 12.5 mPas, even more preferably at least 15 mPas, measured at 1.8 weight-% concentration of cationized starch in an aqueous solution comprising 9.1 weight-% of NaCl, at 25 °C. According to one embodiment the viscosity of the cationized starch may be in a range of 10 - 100 mPas, preferably 12.5 - 50 mPas or 15 - 50 mPas, when measured at 1.8 weight-% concentration of cationized starch in aqueous solution, comprising 9.1 weight-% of NaCl, at 25 °C.

According to one preferable embodiment of the present invention the cationized polysaccharide component consists of cationized cellulose.

The treatment system according to the present invention further comprises a synthetic cationic copolymer of (meth)acrylamide, preferably acrylamide, and at least one cationic monomer, wherein the copolymer has a charge density of at most 5 meq/g, preferably at the most 4.0 meq/g, more preferably at the most 3.5 meq/g, even more preferably at the most 2.5 meq/g. According to one embodiment of the invention the charge density of the synthetic cationic copolymer may be in a range of 0.1 - 5.0 meq/g, preferably 0.1 - 4.0 meq/g, more preferably 0.1 - 3.5 meq/g, even more preferably 0.7 - 2.5 meq/g. The charge density values can be measured by using Mütek at pH 4.0.

The synthetic cationic copolymer is preferably a copolymer of (meth)acrylate and at least one cationic monomer selected from a group of 2-(dimethylamino)ethyl acrylate (ADAM), [2-(acryloyloxy)ethyl] trimethylammonium chloride (ADAM-CI), 2-(dimethylamino)ethyl acrylate benzylchloride, 2-(dimethylamino)ethyl acrylate dimethylsulphate, 2-dimethylaminoethyl methacrylate (MADAM), [2-(methacryloyloxy)ethyl] trimethylammonium chloride (MADAM-CI), 2-dimethylaminoethyl methacrylate dimethylsulphate, [3-(acryloylamino)propyl] trimethylammonium chloride (APTAC), [3-(methacryloylamino)propyl] trimethylammonium chloride (MAPTAC), and diallyldimethylammonium chloride (DADMAC).

The synthetic cationic copolymer may have a standard viscosity SV of at least 2.0 mPas, preferably at least 2.5 mPas, more preferably at least 3.0 mPas. According to one embodiment the standard viscosity of the synthetic cationic copolymer may be in a range of 2.0 - 7.0 mPas, preferably 2.5 - 6.5 mPas, more preferably 4.0 - 5.5 mPas. According to one preferable embodiment the standard viscosity of the synthetic cationic copolymer may be in a range of 4.5 - 6.5 mPas, preferably 5.0 - 6.5 mPas. The standard viscosity is measured at 0.1 weight-% solids content in an aqueous NaCl solution (1 M), at 25 °C, using Brookfield DVII T viscometer with UL adapter and rotational speed 60 rpm. The standard viscosity of the polymer gives an indication of the length and/or weight of the polymer chains of the polymer. A general relationship between the standard viscosity of the copolymer and its average molecular weight is given in Table A.

The relationship shown in Table A is based on standard viscosity and intrinsic viscosity measurements and using Mark-Houwink-Sakurada constants K=2.57·10⁻⁴ dl/g and a=0.67.

Table A Relationship between the standard viscosity and the average molecular weight of the synthetic cationic copolymer.

| Standard viscosity [mPas] | Average molecular weight [10⁶ g/mol] |
|---|---|
| 2 | 1.3 |
| 2.5 | 3.4 |
| 3 | 5.5 |
| 3.5 | 7.6 |
| 4 | 9.8 |
| 4,5 | 11.9 |
| 5 | 14.0 |
| 5.5 | 16.1 |
| 6 | 18.3 |
| 6.5 | 20.4 |
| 7 | 22.5 |

According to one embodiment of the invention the treatment system may be used in amount of 1 - 30 kg/ton dry sludge, preferably 2 - 20 kg/ton dry sludge, more preferably 3 - 15 kg/ton dry sludge. The amount of treatment system includes both the cationized polysaccharide component and the synthetic cationic copolymer.

According to one embodiment of the invention the treatment system may comprise cationized polysaccharide component and the synthetic cationic copolymer in a dry weight ratio from 80:20 to 20:80, preferably from 70:30 to 30:70, more preferably from 60:40 to 40:60.

The treatment system according to the present invention is especially suitable for treating effluents and/or sludges originating from a manufacturing process of a cellulosic pulp and fibrous cellulosic webs, such as paper, board, tissue or the like. The effluent and/or sludge is in form of a suspension comprising solid material and/or solid particles suspended in an aqueous liquid phase. For example, the suspension may comprise cellulosic fibre material, other solid or semi-solid particles, such as organic and/or inorganic particles, such as inorganic fillers. It may also comprise various chemicals, such as inks and polymeric materials.

Preferably the treatment system is used for treating sludges originating from a manufacture of fibrous cellulosic web, such as paper, board, tissue or the like. Such sludge typically comprises a continuous aqueous liquid phase and fibre material suspended in the aqueous phase. The fibre material may be cellulosic fibre material originating from wood or non-wood sources, preferably from wood sources. The fibre material is here understood as the long fibre fraction, which is retained on 100 mesh filter. The sludge may comprise long fibre material as solid material in amount of 2 - 50 weight-%, preferably 5 - 30 weight-%, more preferably 7 - 20 weight-%. Further, the sludge may comprise inorganic mineral particles and have ash content in the range of 20 - 90 %, preferably 20 - 85 %. Ash content is determined by using Standard ISO 1762, temperature 525 °C. The inorganic mineral particles in the sludge originate from fillers and coating materials used in paper and board making. It has been observed that the treatment system provides good dewatering effect, as well as a high solids content after pressing and good filtrate quality.

Before the treatment with the treatment system, the sludge may have a solids content in the range of 1 - 5 weight-%, preferably 1.5 - 4 weight-%.

According to one preferable embodiment the treatment system is in form of a dry pre-mixture of cationized polysaccharide component and the synthetic cationic copolymer. The treatment system or its individual components, i.e. the cationized polysaccharide component and the synthetic cationic copolymer, are dissolved and diluted with water into suitable working solutions before they are added to the effluent and/or sludge.

According to the present invention the treatment system is added to the suspension comprising solid material and/or particles suspended in an aqueous liquid phase. The water-soluble cationized polysaccharide component and the synthetic cationic copolymer of the treatment system, both in solution form, may be added to the suspension as a mixture or separately from each other. According to one preferable embodiment the cationized polysaccharide component and the synthetic cationic copolymer may be added separately to the effluent and/or sludge in form of the suspension. The separate addition may be done simultaneously or successively.

The treatment system is allowed to flocculate the suspension. It is assumed that the treatment system interacts with the solid material and/or solid particles present in the suspension, such as cellulosic fibre material, inks, polymeric materials, and inorganic fillers, and causes them to flocculate. The cationized polysaccharide component and the synthetic cationic copolymer of the treatment system provide effective bonding ability to these solid materials and particles having anionically charged sites on their surface.

After flocculation of the suspension, the suspension is dewatered by mechanically separating the flocculated solid material and/or particles from the aqueous liquid phase. The separation of the flocculated solid material and/or particles may be performed for example by using gravity sedimentation, filtering, pressing or centrifugal force. Various mechanical dewatering means, such as centrifuge(s), belt press or chamber press, preferably centrifuge(s), can be employed for separation of the aqueous phase from the formed flocs.

When used for treatment or conditioning of sludge, the treatment composition may be added to the sludge prior or at a thickening stage, which may comprise a pre-thickening step and a pressing step. The treatment system may be added to the sludge before the pre-thickening step, where a first part of the aqueous phase is removed from the sludge. For example, the treatment system or its components may be added to the sludge 1 s - 10 min, preferably 1 - 20 s, before the pre-thickening step. The treatment system causes the solid material and/or solid particles present in the sludge, such as fibres and inorganic particles, to flocculate. The treatment system provides a good floc size and stability which improves the dewatering effect. An effective dewatering rate both at free drainage in the pre-thickening step as well as under pressure in the pressing step can be obtained. Pre-thickening may be performed e.g. by using a thickening drum, gravity table or gravity belt, i.e. at free drainage without applied pressure. Pre-thickening step may take 5 - 30 s, typically 10 - 20 s.

### EXPERIMENTAL

### Example 1: Cationization of cellulose and its characterization

Never-dried hardwood dissolving pulp was refined in a Valley-Hollander to a SR value of 30, determined with L&W's SR-tester SN2270.

The cellulose cationization was performed according to general principles as disclosed in WO 2021/111040. Lödige DVT 5 laboratory reactor was used in cellulose pulp pre-drying, mercerization and cationization. Mixing rate was 100 rpm.

Mercerization conditions, reagents and their amount are given in Table 1. In mercerization of Sample B added water was replaced by isopropanol (IPA). Some water was still present in mercerization of Sample B, originating from sodium hydroxide (NaOH) and (3-chloro-2-hydroxypropyl)trimethylammonium chloride (CHPTAC) solutions and from the moisture in cellulose pulp.

Cationization was carried out directly after the mercerization step in the same reactor. Temperature was raised to reaction temperature and cationization reagent (3-chloro-2-hydroxypropyl)trimethylammonium chloride (CHPTAC) was pumped into the Lödige reactor and allowed to react for selected reaction time. Cationization conditions and used CHPTAC amounts are also given in Table 1.

**Table 1 Reagents and mercerization and reaction conditions**

| | **Sample A** | **Sample B** |
|---|---|---|
| Cellulose type | Never dried hardwood dissolving pulp | Never dried hardwood dissolving pulp |
| *Mercerization* | | |
| Dry content of cellulose after pre-drying [%] | 96.0 | 92.6 |
| Cellulose after pre drying [g] | 625 | 372 |
| Added water [g] | 748 | - |
| Added isopropanol [g] | - | 428 |
| Conc. of NaOH [%] | 40 | 40 |
| NaOH [g] | 538 | 308 |
| Conc. of CHPTAC [%] | 60 | 60 |
| *Cationization* | | |
| CHPTAC [g] | 1000 | 572 |
| *Total, g* | 2910 | 1680 |
| Cellulose consistency total [%] | 20.6 | 20.5 |
| *Processing parameters* | | |
| Mercerization temperature [°C] | 0 | 0 |
| Mercerization time [h] | 25 | 20 |
| CHPTAC feeding time [min] | 60 | 60 |
| CHPTAC feeding temperature [°C] | 60 | 60 |
| Reaction temperature [°C] | 60 | 60 |
| Reaction time [h] | 23 | 20 |

After the cationization reaction was completed the reaction mixture was cooled down to room temperature, after which a small sample of the reaction mixture was purified for characterization (viscosity, charge density) and application experiments.

Purification: about 5 g sample of reaction mixture was diluted with deionized water to total 50 g at room temperature and this diluted sample solution was mixed with magnetic stirrer for 15 min. 500 ml of IPA was poured in a separate beaker and mixing with magnetic stirrer was started. The diluted sample solution was poured into IPA slowly as a thin stream under mixing. The obtained mixture was mixed for 15 min, after which time the mixing was stopped and the precipitate was allowed to sediment to the bottom of the beaker. Then the content of the beaker was filtered through a black ribbon filter paper in a Büchner funnel. 30 ml of IPA was added to wash the precipitate and it was let to filter through. This washing step was done twice. Finally the precipitated sample was dried overnight in an oven at 60 °C.

Viscosity measurement: Salt solution viscosity was measured using a Brookfield LV viscometer with a small sample adapter at 25 °C, using either spindle SC4-18 or SC4-31, depending on viscosity level. The viscosity measurement was performed by using maximum possible rotational speed. The cationized cellulose sample was first dissolved in deionized water as 2 weight-% solution. Then sodium chloride (NaCl) in weight ratio NaCl:cellulose of 5:1 was added and allowed to dissolve under mixing before viscosity was measured. This means that the viscosity of the sample is measured at 1.8 weight-% concentration of sample in an aqueous solution comprising 9.1 weight-% of NaCl.

Charge density: Charge density at pH 4 was determined using AFG Analytics' particle charge titrator. Cationized cellulose sample was dissolved as 0.025 - 0.05 weight-% solution in deionized water, pH was adjusted to 4.0 with 0.1 M acetic acid and titrated using 0.001 N sodium polyethylenesulfonate (PES-Na) solution as the titrant. During titration pH was normally increasing 0.1 - 0.2 pH units. Charge density is expressed as meq/g dry substance. DS (degree of substitution) was calculated from charge density result.

The results for the cationized cellulose samples are shown in Table 2.

**Table 2 Characterization of the cationized cellulose samples**

| | Charge density [meq/g dry] | Calculated DS | Salt solution viscosity [mPas] | Spindle # | rpm |
|---|---|---|---|---|---|
| Sample A | 1.1 | 0.21 | 272 | 31 | 60 |
| Sample B | 3.7 | 1.4 | 670 | 31 | 30 |

### Example 2: Use of cationized cellulose in dewatering of paper mill wastewater sludge

Paper mill wastewater mixed sludge was obtained from a Finnish paper mill. The sludge had a dry content 3.8 %.

The dewatering experiments were carried out as free drainage tests. 500 ml of the sludge was poured into a beaker. Mixing with motor mixer and a stirrer at 1000 rpm was started. The test sample as 0.2 % water solution was added and 10 s after polymer dosing the mixing was stopped and the sludge was poured through a wire in a funnel. The filtrate was collected into a beaker which was standing on a balance under the funnel. The balance was recording the filtration rate of the filtrate. From the filtrate also turbidity was measured using Hach portable turbimeter.

Cationic polyacrylamide CPAM, a copolymer of acrylamide and 2 mol-% cationic monomers, standard viscosity SV 5.5 mPas, was used as a reference. Standard viscosity is defined as viscosity of 0.1 % polymer solution in 1 M NaCl measured using Brookfield LV viscometer and UL adapter at 60 rpm and at 25 °C.

The cationized cellulose samples from example 1 were used to replace part of the CPAM, as shown in Table 3. The dewatering test results are also shown in Table 3.

**Table 3 Dewatering test results. Dosages are given as kg per ton dry sludge.**

| | Dewatered filtrate after 10 s [g] | Filtrate turbidity [NTU] |
|---|---|---|
| CPAM (3 kg/t dry) | 103 | 146 |
| CPAM (1.5 kg/t) + Sample A (1.5 kg/t dry) | 114 | 174 |
| CPAM (1.5 kg/t) + Sample B (1.5 kg/t dry) | 103 | 146 |

The results in Table 3 indicate that a treatment system where cationized cellulose replaces 50 % of the synthetic cationic polyacrylamide can provide at least as good, or even better, sludge dewatering performance results than conventional fully synthetic copolymer. The treatment system according to the present invention thus enables an effective dewatering and a possibility to significantly increase the amount of biobased components in the treatment of paper mill sludge.

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

## Claims

1. Treatment system for treating effluent and/or sludge from a manufacturing process of cellulosic pulp or a fibrous cellulosic web, such as paper or board, wherein the effluent and/or sludge is in form of a suspension comprising solid material and/or particles suspended in an aqueous liquid phase, the treatment system comprising
- a water-soluble cationized polysaccharide component comprising cationized cellulose having a degree of substitution DS at least 0.32, whereby the degree of substitution indicates the number of cationic groups associated with or connected to the cellulose structure, and a charge density of at least 1.5 meq/g dry, measured at pH 4, and
- a synthetic cationic copolymer of (meth)acrylamide and at least one cationic monomer, the copolymer having a charge density of at most 5 meq/g.

2. Treatment system according to claim 1, **characterised in that** the cationized polysaccharide component comprises cationized cellulose having the charge density of at least 1.75 meq/g dry, preferably at least 2 meq/g dry.

3. Treatment system according claims 1 or 2, **characterised in that** the cationized polysaccharide component comprises cationized cellulose having a turbidity of less than 1000 NTU, preferably less than 500 NTU, more preferably less than 250 NTU.

4. Treatment system according to claims 1, 2 or 3, **characterised in that** the cationized polysaccharide component comprises cationized cellulose having the degree of substitution DS at least 0.37, preferably at least 0.4.

5. Treatment system according to any of preceding claims 1 - 4, **characterised in that** the cationized cellulose has a viscosity of at least 80 mPas, preferably at least 100 mPas, more preferably at least 150 mPas, measured at 1.8 weight-% concentration of cationized cellulose in an aqueous solution comprising 9.1 weight-% of NaCl, at 25 °C.

6. Treatment system according to any of preceding claims 1 - 5, **characterised in that** the cationized polysaccharide component further comprises cationized starch, which preferably has a viscosity of at least 10 mPas, more preferably at least 12.5 mPas, even more preferably at least 15 mPas, measured at 1.8 weight-% concentration of cationized cellulose in an aqueous solution comprising 9.1 weight-% of NaCl, at 25 °C.

7. Treatment system according to any of preceding claims 1 - 5, **characterised in that** the cationized polysaccharide component consists of cationized cellulose.

8. Treatment system according to any of preceding claims 1 - 7, **characterised in that** the synthetic cationic copolymer is a copolymer of (meth)acrylate and at least one cationic monomer selected from a group of 2-(dimethylamino)ethyl acrylate (ADAM), [2-(acryloyloxy)ethyl] trimethylammonium chloride (ADAM-CI), 2-(dimethylamino)ethyl acrylate benzylchloride, 2-(dimethylamino)ethyl acrylate dimethylsulphate, 2-dimethylaminoethyl methacrylate (MADAM), [2-(methacryloyloxy)ethyl] trimethylammonium chloride (MADAM-Cl), 2-dimethylaminoethyl methacrylate dimethylsulphate, [3-(acryloylamino)propyl] trimethylammonium chloride (APTAC), [3-(methacryloylamino)propyl] trimethylammonium chloride (MAPTAC), and diallyldimethylammonium chloride (DADMAC).

9. Treatment system according to any of preceding claims 1 - 8, **characterised in that** the synthetic cationic copolymer has
- the charge density in a range of 0.1 - 5.0 meq/g, preferably 0.1 - 4.0 meq/g, more preferably 0.1 - 3.5 meq/g, even more preferably 0.7 - 2.5 meq/g, and/or
- a standard viscosity SV of at least 2.0 mPas, preferably at least 2.5 mPas, more preferably at least 3.0 mPas.

10. Treatment system according to any of preceding claims 1 - 9, **characterised in that** the treatment system comprises cationized polysaccharide component and the synthetic cationic copolymer in a dry weight ratio from 80:20 to 20:80, preferably from 70:30 to 30:70, more preferably from 60:40 to 40:60.

11. Use of a treatment system according to any of claims 1 - 10 for treatment of effluent and/or sludge in form of a suspension comprising solid material and/or particles suspended in an aqueous liquid phase in a manufacture of cellulosic pulp or fibrous cellulosic web, such as paper, board, tissue or the like.

12. Use according to claim 11, **characterised in that** that the cationized polysaccharide component and the synthetic cationic copolymer are added separately to the effluent and/or sludge.

13. Use according to claim 11 or 12, **characterised in that** the sludge comprises long fibre material as solid material in amount of 2 - 50 weight-%, preferably 5 - 30 weight-%, more preferably 7 - 20 weight-%, and/or the sludge comprises inorganic mineral particles and has ash content in the range of 20 - 90 %, preferably 20 - 85 %.

14. Use according to any of preceding claims 11 - 13, **characterized in that** the sludge has solids content in the range of 1 - 5 weight-%, preferably 1.5 - 4 weight-%.

15. Method for treating an effluent and/or sludge in a manufacturing process of cellulosic pulp or fibrous cellulosic web, wherein the effluent and/or sludge is form of a suspension comprising solid material and/or particles suspended in an aqueous liquid phase, the method comprising
- adding to the suspension a treatment system comprising (i) a water-soluble cationized polysaccharide component comprising cationized cellulose, having a degree of substitution DS at least 0.32, whereby the degree of substitution indicates the number of cationic groups associated with or connected to the cellulose structure, and a charge density of at least 1.5 meq/g dry, measured at pH 4; and (ii) a synthetic cationic copolymer of (meth)acrylamide and at least one cationic monomer, the copolymer having a charge density of at most 5 meq/g,
- allowing the treatment system to flocculate the suspension, and
- dewatering the suspension by mechanically separating the flocculated solid material and/or particles from the aqueous liquid phase.

## Patentansprüche

1. Behandlungssystem zur Behandlung von Abwasser und/oder Schlamm aus einem Verfahren zur Herstellung von Cellulosezellstoff oder einer faserigen Cellulosebahn, wie z.B. Papier oder Pappe, wobei das Abwasser und/oder der Schlamm in der Form einer Suspension vorliegt, die festes Material und/oder Partikel in einer wässrigen flüssigen Phase suspendiert umfasst, wobei das Behandlungssystem umfasst
- eine wasserlösliche kationisierte Polysaccharidkomponente, die kationisierte Cellulose mit einem Substitutionsgrad DS von wenigstens 0,32, wobei der Substitutionsgrad die Anzahl der kationischen Gruppen angibt, die mit der Cellulosestruktur verbunden oder daran gebunden sind, und einer Ladungsdichte von wenigstens 1,5 meq/g trocken, gemessen bei pH 4, umfasst und
- ein synthetisches kationisches Copolymer von (Meth)acrylamid und wenigstens einem kationischen Monomer, wobei das Copolymer eine Ladungsdichte von höchstens 5 meq/g aufweist.

2. Behandlungssystem nach Anspruch 1, **dadurch gekennzeichnet, dass** die kationisierte Polysaccharidkomponente kationisierte Cellulose mit der Ladungsdichte von wenigstens 1,75 meq/g trocken, vorzugsweise wenigstens 2 meq/g trocken, umfasst.

3. Behandlungssystem nach Anspruch 1 oder 2, **dadurch gekennzeichnet, dass** die kationisierte Polysaccharidkomponente kationisierte Cellulose mit einer Trübung von weniger als 1000 NTU, vorzugsweise weniger als 500 NTU, bevorzugter weniger als 250 NTU, umfasst.

4. Behandlungssystem nach Anspruch 1, 2 oder 3, **dadurch gekennzeichnet, dass** die kationisierte Polysaccharidkomponente kationisierte Cellulose mit dem Substitutionsgrad DS von wenigstens 0,37, vorzugsweise wenigstens 0,4, umfasst.

5. Behandlungssystem nach einem der vorstehenden Ansprüche 1 - 4, **dadurch gekennzeichnet, dass** die kationisierte Cellulose eine Viskosität von wenigstens 80 mPas, vorzugsweise wenigstens 100 mPas, bevorzugter wenigstens 150 mPas, gemessen bei 1,8 Gew.-% Konzentration an kationisierter Cellulose in einer wässrigen Lösung, die 9,1 Gew.-% NaCl umfasst, bei 25 °C aufweist.

6. Behandlungssystem nach einem der vorstehenden Ansprüche 1 - 5, **dadurch gekennzeichnet, dass** die kationisierte Polysaccharidkomponente ferner kationisierte Stärke umfasst, die vorzugsweise eine Viskosität von wenigstens 10 mPas, bevorzugter wenigstens 12,5 mPas, noch bevorzugter wenigstens 15 mPas, gemessen bei 1,8 Gew.-% Konzentration an kationisierter Cellulose in einer wässrigen Lösung, die 9,1 Gew.-% NaCl umfasst, bei 25 °C aufweist.

7. Behandlungssystem nach einem der vorstehenden Ansprüche 1 - 5, **dadurch gekennzeichnet, dass** die kationisierte Polysaccharidkomponente aus kationisierter Cellulose besteht.

8. Behandlungssystem nach einem der vorstehenden Ansprüche 1 - 7, **dadurch gekennzeichnet, dass** das synthetische kationische Copolymer ein Copolymer von (Meth)acrylat und wenigstens einem kationischen Monomer ausgewählt aus einer Gruppe von 2-(Dimethylamino)ethylacrylat (ADAM), [2-(Acryloyloxy)ethyl]trimethylammoniumchlorid (ADAM-Cl), 2-(Dimethylamino)ethylacrylatbenzylchlorid, 2-(Dimethylamino)ethylacrylatdimethylsulfat, 2-Dimethylaminoethylmethacrylat (MADAM), [2-(Methacryloyloxy)ethyl]trimethylammoniumchlorid (MADAM-Cl), 2-Dimethylaminoethylmethacrylatdimethylsulphat, [3-(Acryloylamino)propyl]trimethylammoniumchlorid (APTAC), [3-(Methacryloylamino)propyl]trimethylammoniumchlorid (MAPTAC) und Diallyldimethylammoniumchlorid (DADMAC) ist.

9. Behandlungssystem nach einem der vorstehenden Ansprüche 1 - 8, **dadurch gekennzeichnet, dass** das synthetische kationische Copolymer aufweist
- die Ladungsdichte in einem Bereich von 0,1 - 5,0 meq/g, vorzugsweise 0,1 - 4,0 meq/g, bevorzugter 0,1 - 3,5 meq/g, noch bevorzugter 0,7 - 2,5 meq/g, und/oder
- eine Standardviskosität SV von wenigstens 2,0 mPas, vorzugsweise wenigstens 2,5 mPas, bevorzugter wenigstens 3,0 mPas.

10. Behandlungssystem nach einem der vorstehenden Ansprüche 1 - 9, **dadurch gekennzeichnet, dass** das Behandlungssystem kationisierte Polysaccharidkomponente und das synthetische kationische Copolymer in einem Trockengewichtsverhältnis von 80:20 bis 20:80, vorzugsweise von 70:30 bis 30:70, bevorzugter von 60:40 bis 40:60, umfasst.

11. Verwendung eines Behandlungssystems nach einem der Ansprüche 1 - 10 zur Behandlung von Abwasser und/oder Schlamm in der Form einer Suspension, die Feststoff und/oder Partikel in einer wässrigen flüssigen Phase suspendiert umfasst, bei einer Herstellung von Zellstoff oder faseriger Zellstoffbahn, wie z.B. Papier, Pappe, Papiertuch oder dergleichen.

12. Verwendung nach Anspruch 11, **dadurch gekennzeichnet, dass** die kationisierte Polysaccharidkomponente und das synthetische kationische Copolymer dem Abwasser und/oder Schlamm getrennt zugegeben werden.

13. Verwendung nach Anspruch 11 oder 12, **dadurch gekennzeichnet, dass** der Schlamm langfaseriges Material als festes Material in einer Menge von 2 - 50 Gew.-%, vorzugsweise 5 - 30 Gew.-%, bevorzugter 7 - 20 Gew.-%, umfasst und/oder der Schlamm anorganische Mineralpartikel umfasst und einen Aschegehalt in dem Bereich von 20 - 90 %, bevorzugt 20 - 85 %, aufweist.

14. Verwendung nach einem der vorstehenden Ansprüche 11 - 13, **dadurch gekennzeichnet, dass** der Schlamm einen Feststoffgehalt in dem Bereich von 1 - 5 Gew.-%, vorzugsweise 1,5 - 4 Gew.-%, aufweist.

15. Verfahren zur Behandlung eines Abwassers und/oder Schlamms bei einem Verfahren zur Herstellung von Cellulosezellstoff oder einer faserigen Cellulosebahn, wobei der Abwasser und/oder der Schlamm in der Form einer Suspension vorliegt, die festes Material und/oder Partikel in einer wässrigen flüssigen Phase suspendiert umfasst, wobei das Verfahren umfasst
- zu der Suspension Zugeben eines Behandlungssystems umfassend (i) eine wasserlösliche kationisierte Polysaccharidkomponente, die kationisierte Cellulose mit einem Substitutionsgrad DS von wenigstens 0,32, wobei der Substitutionsgrad die Anzahl der kationischen Gruppen angibt, die mit der Cellulosestruktur verbunden oder daran gebunden sind, und eine Ladungsdichte von wenigstens 1,5 meq/g trocken, gemessen bei pH 4, umfasst; und (ii) ein synthetisches kationisches Copolymer von (Meth)acrylamid und wenigstens einem kationischen Monomer, wobei das Copolymer eine Ladungsdichte von höchstens 5 meq/g aufweist,
- Erlauben, dass das Behandlungssystem die Suspension ausflockt, und
- Entwässern der Suspension durch mechanisches Trennen des ausgeflockten festen Materials und/oder der Partikel von der wässrigen flüssigen Phase.

## Revendications

1. Système de traitement de traitement d'effluents et/ou de boue provenant d'un procédé de fabrication de pâte cellulosique ou d'une bande cellulosique fibreuse, telle que du papier ou du carton, dans lequel les effluents et/ou la boue se présentent sous la forme d'une suspension comprenant une matière solide et/ou des particules en suspension dans une phase liquide aqueuse, le système de traitement comprenant
- un composant polysaccharide cationisé soluble dans l'eau comprenant une cellulose cationisée ayant un degré de substitution DS d'au moins 0,32, le degré de substitution indiquant le nombre de groupes cationiques associés à, ou reliés à, la structure de cellulose, et une densité de charge d'au moins 1,5 méq/g sec, mesurée à pH 4, et
- un copolymère cationique synthétique de (méth)acrylamide et d'au moins un monomère cationique, le copolymère ayant une densité de charge d'au plus 5 méq/g.

2. Système de traitement selon la revendication 1, **caractérisé en ce que** le composant polysaccharide cationisé comprend une cellulose cationisée ayant la densité de charge d'au moins 1,75 méq/g sec, de préférence d'au moins 2 méq/g sec.

3. Système de traitement selon la revendication 1 ou 2, **caractérisé en ce que** le composant polysaccharide cationisé comprend une cellulose cationisée ayant une turbidité inférieure à 1 000 UTN, de préférence inférieure à 500 UTN, plus préférablement inférieure à 250 UTN.

4. Système de traitement selon la revendication 1, 2 ou 3, **caractérisé en ce que** le composant polysaccharide cationisé comprend une cellulose cationisée ayant le degré de substitution DS d'au moins 0,37, de préférence d'au moins 0,4.

5. Système de traitement selon l'une quelconque des revendications précédentes 1 à 4, **caractérisé en ce que** la cellulose cationisée a une viscosité d'au moins 80 mPas, de préférence d'au moins 100 mPas, plus préférablement d'au moins 150 mPas, mesurée à une concentration de 1,8 % en poids de cellulose cationisée dans une solution aqueuse comprenant 9,1 % en poids de NaCl, à 25 °C.

6. Système de traitement selon l'une quelconque des revendications 1 à 5, **caractérisé en ce que** le composant polysaccharide cationisé comprend en outre un amidon cationisé, qui a de préférence une viscosité d'au moins 10 mPas, plus préférablement d'au moins 12,5 mPas, encore plus préférablement d'au moins 15 mPas, mesurée à une concentration de 1,8 % en poids de cellulose cationisée dans une solution aqueuse comprenant 9,1 % en poids de NaCl, à 25 °C.

7. Système de traitement selon l'une quelconque des revendications précédentes 1 à 5, **caractérisé en ce que** le composant polysaccharide cationisé est constitué de cellulose cationisée.

8. Système de traitement selon l'une quelconque des revendications précédentes 1 à 7, **caractérisé en ce que** le copolymère cationique synthétique est un copolymère de (méth)acrylate et d'au moins un monomère cationique choisi dans un groupe constitué par l'acrylate de 2-(diméthylamino)éthyle (ADAM), chlorure de [2-(acryloyloxy)éthyl]triméthylammonium (ADAM-Cl), chlorure de benzyle acrylate de 2-(diméthylamino)éthyle, diméthylsulfate acrylate de 2-(diméthylamino)éthyle, méthacrylate de 2-diméthylaminoéthyle (MADAM), chlorure de [2-(méthacryloyloxy)éthyl]triméthylammonium (MADAM-Cl), diméthylsulfate méthacrylate de 2-diméthylaminoéthyle, chlorure de [3-(acryloylamino)propyl]triméthylammonium (APTAC), chlorure de [3-(méthacryloylamino)propyl]triméthylammonium (MAPTAC) et chlorure de diallyldiméthylammonium (DADMAC).

9. Système de traitement selon l'une quelconque des revendications précédentes 1 à 8, **caractérisé en ce que** le copolymère cationique synthétique possède
- la densité de charge dans une plage de 0,1 à 5,0 méq/g, de préférence 0,1 à 4,0 méq/g, plus préférablement 0,1 à 3,5 méq/g, encore plus préférablement 0,7 à 2,5 méq/g, et/ou
- une viscosité standard SV d'au moins 2,0 mPas, de préférence d'au moins 2,5 mPas, plus préférablement d'au moins 3,0 mPas.

10. Système de traitement selon l'une quelconque des revendications précédentes 1 à 9, **caractérisé en ce que** le système de traitement comprend un composant polysaccharide cationisé et le copolymère cationique synthétique en un rapport de poids sec de 80:20 à 20:80, de préférence de 70:30 à 30:70, plus préférablement de 60:40 à 40:60.

11. Utilisation d'un système de traitement selon l'une quelconque des revendications 1 à 10 pour le traitement d'effluents et/ou de boue sous forme d'une suspension comprenant une matière solide et/ou des particules en suspension dans une phase liquide aqueuse dans une fabrication de pâte cellulosique ou de bande cellulosique fibreuse, telle que du papier, du carton, du tissu ou analogue.

12. Utilisation selon la revendication 11, **caractérisée en ce que** le composant polysaccharide cationisé et le copolymère cationique synthétique sont ajoutés séparément aux effluents et/ou à la boue.

13. Utilisation selon la revendication 11 ou 12, **caractérisée en ce que** la boue comprend comme matière solide un matériau à fibres longues en une quantité de 2 à 50 % en poids, de préférence de 5 à 30 % en poids, plus préférablement de 7 à 20 % en poids, et/ou la boue comprend des particules minérales inorganiques et a une teneur en cendres dans la plage de 20 à 90 %, de préférence de 20 à 85 %.

14. Utilisation selon l'une quelconque des revendications précédentes 11 à 13, **caractérisée en ce que** la boue a une teneur en solides dans la plage de 1 à 5 % en poids, de préférence de 1,5 à 4 % en poids.

15. Procédé de traitement d'effluents et/ou d'une boue dans un procédé de fabrication de pâte cellulosique ou de bande fibreuse cellulosique, dans lequel les effluents et/ou la boue sont sous forme d'une suspension comprenant une matière solide et/ou des particules en suspension dans une phase liquide aqueuse, le procédé comprenant
- l'ajout à la suspension d'un système de traitement comprenant (i) un composant polysaccharide cationisé soluble dans l'eau comprenant une cellulose cationisée, ayant un degré de substitution DS d'au moins 0,32, le degré de substitution indiquant le nombre de groupes cationiques associés à, ou liés à, la structure de cellulose, et une densité de charge d'au moins 1,5 méq/g sec, mesurée à pH 4 ; et (ii) un copolymère cationique synthétique de (méth)acrylamide et d'au moins un monomère cationique, le copolymère ayant une densité de charge d'au plus 5 méq/g,
- le fait de laisser le système de traitement floculer la suspension, et
- la déshydratation de la suspension par séparation mécanique de la matière solide floculée et/ou des particules de la phase liquide aqueuse.
